# FASCICULE DE BREVET EUROPEEN

(11) **EP 3 081 438 B1**
(45) Date de publication et mention de la délivrance du brevet: **18.04.2018**
(21) Numéro de dépôt: 16162457.2
(22) Date de dépôt: 25.03.2016
(51) Int. Cl.: B60S 1/38

(54) **EMBOUT D'EXTRÉMITÉ À RATTRAPAGE DE JEU POUR BALAI D'ESSUYAGE**
ENDSTÜCK MIT SPIELNACHSTELLUNG FÜR SCHEIBENWISCHER
END FITTING WITH PLAY COMPENSATION FOR WIPER

(30) Priorité: 14.04.2015 FR 1553223
(43) Date de publication de la demande: 19.10.2016
(73) Titulaire: Valeo Systèmes d'Essuyage, 78322 Le Mesnil Saint Denis (FR)
(72) Inventeur: JOMARD, Olivier, 63170 AUBIERE (FR); HOUSSAT, Stéphane, 63112 BLANZAT (FR); GAUCHER, Vincent, 63720 ENNEZAT (FR); POTON, Eric, 63430 Pont du Château (FR)
(74) Mandataire: Vincent, Catherine Marie Marguerite

(56) Documents cités:
- EP-A1- 2 193 963
- DE-U1-202004 012 109
- FR-A1- 2 905 650
- FR-A1- 2 922 502

## Description

Le domaine de la présente invention est celui des balais d'essuyage utilisés sur les véhicules automobiles. L'invention concerne particulièrement un embout monté à l'extrémité d'un balai d'essuyage. L'invention vise également un balai d'essuyage et un système d'essuyage incorporant un tel balai d'essuyage.

Les véhicules automobiles sont couramment équipés de système d'essuie-glace pour assurer un balayage et un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai est rattaché au bras tournant de l'essuie-glace par un ensemble constitué d'un connecteur mécanique et d'un adaptateur. Le connecteur mécanique est une pièce qui est sertie directement sur le balai plat, alors que l'adaptateur est une pièce intermédiaire qui permet la fixation du connecteur sur le bras de l'essuie-glace.

Le document WO2013/000650 montre un balai d'essuyage d'une vitre d'un véhicule comprenant au moins un support longitudinal ainsi qu'une lame destinée à être appliquée contre la vitre équipé d'un embout d'extrémité comprenant un logement apte à recevoir une partie terminale du support longitudinal, au moins un moyen de verrouillage de la partie terminale du support longitudinal en position engagée dans le logement, au moins un moyen formant butée contre la partie terminale du support longitudinal. L'embout d'extrémité divulgué dans ce document souffre de plusieurs inconvénients.

En premier lieu, on constate que le verrouillage de cet embout d'extrémité implique une gestion très fine de la chaîne de côtes entre la position du moyen de verrouillage et la position de la cavité ménagé dans le support longitudinal.

En second lieu, cet embout d'extrémité doit être conçu pour à la fois autoriser le verrouillage de l'embout sur le support, tout en évitant la présence de jeu entre ces deux pièces, un tel jeu étant nuisible à la perception qualitative du balai d'essuyage recevant un tel support et un tel embout d'extrémité. Une telle conception est compliquée à gérer. FR-A-2922502 montre le préambule de la revendication 1. Le but de la présente invention est donc de résoudre les inconvénients décrits ci-dessus en concevant un embout d'extrémité ou un balai d'essuyage qui comporte un moyen garantissant le bon verrouillage de l'embout sur le support tout en empêchant tous jeux nuisibles à la perception d'un tel balai d'essuyage.

L'invention a donc pour objet un embout d'extrémité pour un balai d'essuyage d'une vitre d'un véhicule comprenant au moins un support longitudinal ainsi qu'une lame destinée à être appliquée contre la vitre, l'embout d'extrémité comprenant un logement apte à recevoir une partie terminale du support longitudinal, l'embout d'extrémité comprenant au moins un moyen de verrouillage de la partie terminale du support longitudinal en position engagée dans le logement, ledit embout d'extrémité comprenant au moins un moyen formant butée contre la partie terminale du support longitudinal, caractérisé en ce que le moyen est flexible de sorte à générer un appui du moyen de verrouillage contre le support longitudinal. Un tel embout permet de rattraper le jeu longitudinal, et il est ainsi possible de concevoir des pièces avec des tolérances moins sévères, et donc moins coûteuses.

Selon un aspect de l'invention, la flexibilité du moyen formant butée résulte d'une élasticité du matériau constitutif du moyen. C'est donc la déformation élastique du moyen qui garantit l'appui du moyen de verrouillage contre le support longitudinal.

Selon un exemple de réalisation, le moyen formant butée est une languette qui prend naissance sur une paroi extérieure délimitant l'embout d'extrémité. Une languette est une pièce qui est issue d'une base et qui s'étend en longueur de manière libre.

Cette languette s'étend dans un volume interne délimité par la paroi extérieure et en particulier selon une direction concourante à un plan dans lequel s'étend majoritairement le logement.

Avantageusement, la languette présente une section parallélépipédique.

Selon un exemple de réalisation, la languette s'étend selon un plan qui forme un angle compris entre 10° et 85° avec un plan long itudinal médian de l'embout d'extrémité.

On notera que le moyen formant butée peut comprendre deux languettes ménagées de part et d'autre d'un plan longitudinal médian de l'embout d'extrémité.

Avantageusement encore, le moyen de verrouillage comprend un bras élastique déplaçable en rotation autour d'un axe qui s'étend sensiblement parallèlement à un plan dans lequel s'étend majoritairement le logement et perpendiculairement à une direction longitudinale de l'embout d'extrémité.

L'invention vis également un balai d'essuyage comprenant au moins un support longitudinal ainsi qu'une lame destinée à être appliquée contre la vitre, le support longitudinal comprenant une encoche ménagée dans une partie terminale du support longitudinal, caractérisé en qu'il comprend un embout d'extrémité selon l'une quelconque des caractéristiques présentées ci-dessus.

De manière avantageuse, le moyen de verrouillage comprend une portion de blocage longitudinal et en appui contre au moins tranche de l'encoche, ledit appui étant généré par la flexibilité du moyen formant butée.

La partie terminale du support longitudinal peut comprendre au moins un biseau en appui sur une face du moyen formant butée.

L'invention couvre enfin un système d'essuyage d'une vitre d'un véhicule comprenant un bras et un balai d'essuyage tel que décrit ci-dessus.

Un tout premier avantage selon l'invention réside dans l'absence de jeu longitudinal, qu'un utilisateur peut percevoir comme étant un défaut ou le signe d'un produit de qualité médiocre. Un tel rattrapage de jeu est opéré de manière extrêmement simple et peu coûteuse, grâce à l'embout d'extrémité selon l'invention.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un balai d'essuyage selon l'invention,
- la figure 2 est une vue en perspective d'un embout d'extrémité selon l'invention,
- la figure 3 est une vue en perspective de face de l'embout d'extrémité selon la figure 2,
- la figure 4 est une vue en perspective de dessous de l'embout d'extrémité selon la figure 2,
- la figure 5 est un vue en coupe V-V illustrée sur la figure 4 de l'embout d'extrémité selon l'invention,
- la figure 6 est une vue schématique illustrant l'insertion de l'embout d'extrémité sur le support longitudinal,
- la figure 7 est une vue schématique montrant la flexibilité du moyen formant butée, ainsi que l'effet de cette flexibilité.

Il faut tout d'abord noter que les figures exposent l'invention de manière détaillée pour mettre en oeuvre l'invention, lesdites figures pouvant bien entendu servir à mieux définir l'invention le cas échéant.

Dans la suite de la description, les dénominations longitudinales ou latérales, dessus, dessous, devant, derrière se réfèrent à l'orientation du balai d'essuyage ou de l'embout d'extrémité selon l'invention. La direction longitudinale correspond à l'axe principal du balai d'essuyage dans lequel il s'étend, alors que les orientations latérales correspondent à des droites concourantes, c'est-à-dire qui croisent la direction longitudinale, notamment perpendiculaires à l'axe longitudinal du balai d'essuyage dans son plan de rotation. Pour les directions longitudinales, les dénominations extérieure ou intérieure s'apprécient par rapport au point de fixation du balai d'essuyage sur un bras d'entrainement en rotation de ce balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

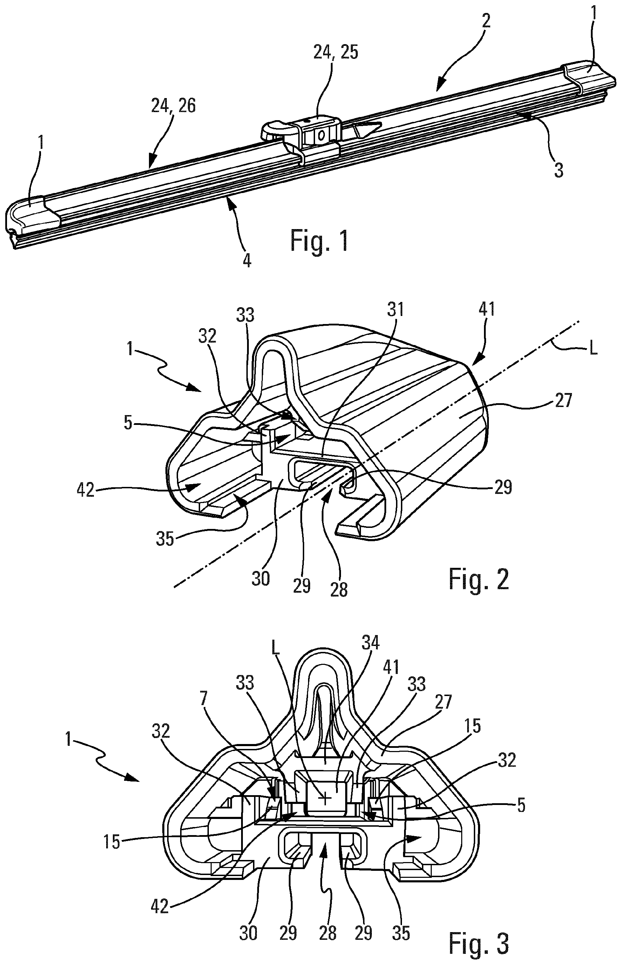

En se référant tout d'abord à la figure 1, on voit un balai d'essuyage 2 selon l'invention. Un tel balai d'essuyage 2 est utilisé pour racler une vitre d'un véhicule et déplacer hors du champ de vision d'un conducteur l'eau déposée sur cette vitre. Le balai d'essuyage 2 est constitué d'au moins un support longitudinal 3, un composant 24, une lame de frottement 4 et au moins un, voire deux, embouts d'extrémité 1 installés sur chaque partie terminale du support longitudinal 3. Le support longitudinal 3 est avantageusement flexible.

Le support longitudinal 3 peut prendre la forme d'une unique bande métallique plate et élastique. Selon une alternative, le support longitudinal 3 peut être formé par deux bandes métalliques et élastiques logées chacune dans une rainure ménagée de part et d'autre de la lame 4. Dans les deux cas ci-dessus, à l'état de repos, une telle bande métallique est courbée selon un plan perpendiculaire à une direction longitudinale de la bande. La fonction d'une telle bande métallique, qu'elle soit unique ou double, est de répartir les efforts d'appui le long de la lame 4 générés par un moyen de connexion 25 attaché au support longitudinal au centre, longitudinalement, du balai d'essuyage 2.

Le composant 24 désigne plusieurs types de pièce constitutive du balai d'essuyage 2. Il peut s'agir du moyen de connexion 25 destiné à relier le balai d'essuyage à un bras d'entraînement en rotation de ce balai. Il peut également s'agir d'un ou plusieurs déflecteurs d'air 26 rapportés sur le support longitudinal 3 et dont la fonction est de transformer le flux d'air passant sur le balai d'essuyage en une force d'appui qui plaque la lame 4 contre la vitre.

Le balai d'essuyage 2 comprend encore deux embouts d'extrémité 1 de constitution identique, telle que décrite ci-dessous en référence aux figures 2 à 7.

Les figures 2 et 3 montrent en perspective l'embout d'extrémité 1. Un tel embout d'extrémité 1 présente une fonction de maintien mécanique des composants constitutifs du balai d'essuyage 2. Cette embout d'extrémité 1 présente également une fonction esthétique puisqu'il permet de couvrir proprement et ainsi cacher l'extrémité de la lame 4, l'extrémité du support longitudinal 3 et l'extrémité du composant 24, notamment le déflecteur d'air 26.

L'embout d'extrémité 1 présente une paroi extérieure 27 globalement complémentaire au profil extérieur du déflecteur d'air 26. A l'intérieur d'un volume interne 42 délimité par la paroi extérieure 27, l'embout d'extrémité 1 comprend un logement 5 de réception de la partie terminale du support longitudinal, non représentée sur ces figures. L'embout d'extrémité 1 comprend encore une rainure 28 dont la fonction est de retenir mécaniquement un talon de la lame 4. Une telle rainure 28 est formée dans un corps 30 de l'embout d'extrémité 1, en particulier dans une partie inférieure de ce corps. Cette rainure 28 est ouverte vers l'extérieur, cette ouverture étant délimitée par deux crochets 29 qui s'étendent longitudinalement le long de l'embout d'extrémité 1.

Le logement 5 est formé dans le corps 30 de l'embout d'extrémité, entre la rainure 28 et la paroi extérieure 27, vu selon une direction perpendiculaire à un plan d'extension de la rainure 28. Le logement 5 est délimité par une paroi de fond 31 et au moins deux bords latéraux 32, ainsi que par au moins un flanc 33, et notamment deux flancs 33. Ces flancs 33 sont formés chacun par une nervure issue de matière avec la paroi extérieure 27. Ces flancs 33 sont reliés entre eux par un pont de matière 34. Les flancs 33 s'étendent dans des plans perpendiculaires à un plan dans lequel s'étend la paroi de fond 31, et ainsi parallèles à des plans d'extension des bords latéraux 32.

L'embout d'extrémité 1 comprend une partie arrière 41 qui ferme le volume interne 42 de l'embout d'extrémité 1 au moyen de la paroi extérieure 27. A l'extrémité opposée à cette partie arrière par rapport au logement 5 selon la direction longitudinale L, l'embout d'extrémité 1 est ouvert et la paroi extérieure 27 délimite une zone de réception 35. Cette dernière reçoit notamment au moins un des composants du balai d'essuyage, et par exemple une extrémité du déflecteur d'air qui vient se loger dans la zone de réception 35.

L'embout d'extrémité 1 comprend encore un moyen de verrouillage 7 visible sur la figure 3. Il s'agit d'un moyen dont la fonction est d'assurer la retenue de l'embout d'extrémité 1 sur le balai d'essuyage selon la direction longitudinale, pour l'empêcher de partir vers l'extérieur du balai, selon la direction longitudinale de celui-ci. Ce moyen de verrouillage 7 prend par exemple la forme d'une dent destinée à se loger dans une encoche, autrement appelée cavité, formée sur ou dans le support longitudinal 3.

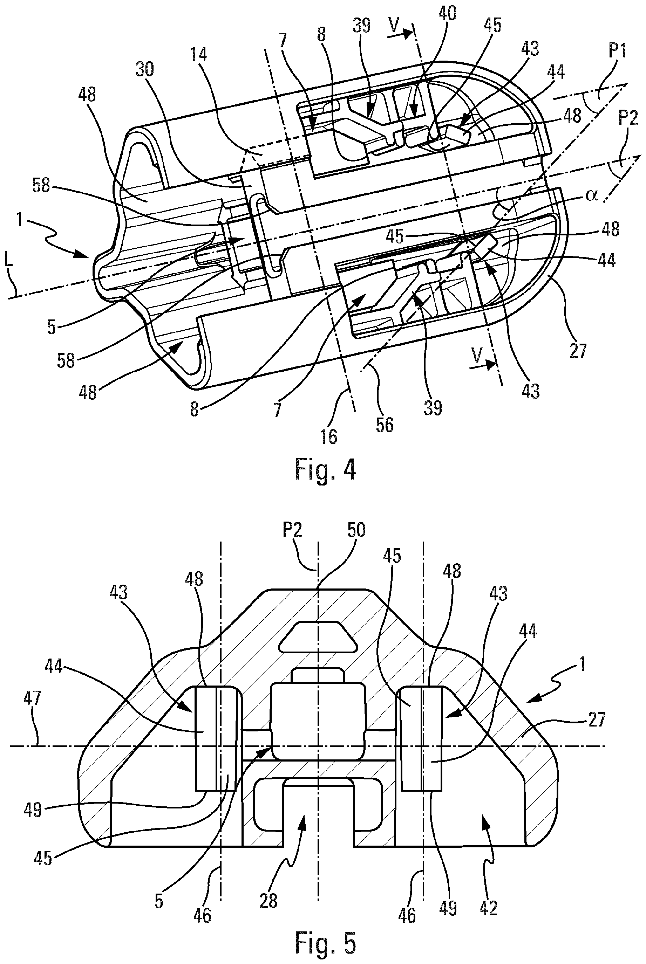

Les figures 4 à 7 montrent plus en détails ce moyen de verrouillage 7. Sur la figure 4, l'embout d'extrémité 1 est ici visible du dessous, la rainure 28 et la zone de réception 35 étant ainsi ouverte vers une face inférieure de l'embout d'extrémité 1.

Le moyen de verrouillage 7 comprend un bras élastique 14 qui prend naissance sur le corps 30 de l'embout d'extrémité 1. Ce bras élastique 14, autrement appelé languette flexible, se déplace en rotation autour d'un axe 16. Ce dernier est parallèle, ou sensiblement parallèle, à un plan dans lequel s'étend le logement 5 qui reçoit la partie terminale du support longitudinal. Cet axe 16 est également perpendiculaire, ou sensiblement perpendiculaire, à la direction longitudinale L de l'embout d'extrémité 1. On comprend ici que le bras élastique se déplace soit vers la face inférieure de l'embout d'extrémité 1, soit vers la paroi extérieure de celui-ci. Pris dans un autre référentiel, le bras élastique 14 se déplace soit vers la lame 4 du balai d'essuyage 2, soit vers un sommet du déflecteur d'air 26 (figure 1), selon une charnière formée par l'axe 16.

Le moyen de verrouillage 7 comprend une portion 8 apte à former une butée longitudinale à l'égard du support longitudinal. Quand l'embout d'extrémité 1 est enfilé sur la partie terminale du support longitudinal, cette portion 8 coopère avec l'encoche formée dans le support longitudinal de sorte à bloquer selon un sens le mouvement longitudinal entre l'embout d'extrémité 1 et le balai d'essuyage. Cette portion 8 vient ainsi en appui contre une tranche ou bord du support longitudinal qui délimite l'encoche.

Le moyen de verrouillage 7 forme un profil en « L », vu dans un plan sensiblement parallèle à un plan dans lequel s'étend majoritairement le logement 5, une branche du « L » s'étendant parallèlement à la direction longitudinale L de l'embout d'extrémité 1 alors qu'une second branche du « L » s'étend perpendiculairement à la direction longitudinale L de l'embout d'extrémité 1, ou dit autrement, parallèlement à l'axe 16.

La figure 4 montre deux moyens de verrouillage 7 formés symétriquement par rapport à un plan longitudinal médian passant notamment par un sommet de l'embout d'extrémité 1.

En outre comme illustré sur la figure 4, chaque crochet 29 présente de préférence une extrémité libre inclinée 58 afin de faciliter l'introduction de rainure 28 autour d'un talon de la lame, lorsque l'embout d'extrémité 1 est enfilé la partie terminale 6 du support flexible 3.

Selon l'invention, l'embout d'extrémité comprend au moins un moyen 43 formant butée contre la partie terminale du support longitudinal. Ce moyen 43 vient directement en appui sur une tranche présente au bout de la partie terminale du support longitudinal. Ce moyen 43 est flexible de sorte à générer un appui du moyen de verrouillage contre le support longitudinal. En d'autres termes, c'est l'élasticité du moyen 43 qui garantit que le moyen de verrouillage 7, en particulier la portion 8, est bien au contact du support longitudinal, bloquant ainsi toutes translation relative entre l'embout d'extrémité 1 et le support longitudinal.

La flexibilité du moyen 43 résulte par exemple d'une élasticité du matériau constitutif du moyen. A titre d'exemple, le matériau qui confère résistance et élasticité est choisi parmi la liste suivante : ABS PC (Polycarbonate/Acrylonitrile Butadiene Styrene), POM (polyoxyméthylène).
Le moyen 43 est en particulier venu de moulage avec la paroi 27 lors de la fabrication de l'embout d'extrémité 1.

L'élasticité du moyen peut également provenir de sa forme allongée et solidaire de la paroi 27 à seulement l'une des extrémités de cette forme. A titre d'exemple de réalisation, le moyen 43 prend la forme d'une languette 44 qui prend naissance sur la paroi extérieure 27 délimitant l'embout d'extrémité 1. De manière plus précise, la languette 44 est issue d'une portion plate 48 faisant partie de la paroi extérieure 27.

La languette 44, sort ainsi d'une face interne à l'embout d'extrémité qui délimite la paroi extérieure 27. On comprend donc que la languette 44 s'étend dans le volume interne 42 délimité par la paroi extérieure 27 et selon une direction concourante à un plan dans lequel s'inscrit le logement 5 de l'embout d'extrémité 1. En dehors de sa base où elle prend naissance, la languette 44 est distante des autres parois constitutives de l'embout d'extrémité 1.
Dans l'exemple illustré la languette 44 est d'épaisseur constante, de façon alternative ou complémentaire, dans une variante non représentée, la flexibilité du moyen 43 résulte de l'épaisseur réduite d'au moins une portion de la languette 44, notamment une portion adjacente à la paroi 27.

Selon un mode de réalisation de l'invention, la languette 44 présente une section parallélépipédique. Il ne s'agit là que d'un exemple de réalisation et on comprendra que toute section est couverte par l'invention, pour autant que cette section autorise une flexion de la languette. En revanche, la section parallélépipédique présente l'avantage de définir au moins une face 45 de forme complémentaire à la tranche ménagée en bout de partie terminale du support longitudinal. Cette section parallélépipédique est vue dans un plan coupant la languette 44, ce plan étant parallèle au plan d'extension du logement 5.

De manière avantageuse, la languette 44 s'étend selon un plan P1 dont une direction 56 forme un angle α compris entre 10° et 85° avec un plan P2 longitudinal médian de l'embout de l'embout d'extrémité 1, dans lequel s'inscrit la direction longitudinale L d'extension de l'embout d'extrémité 1. De manière plus précise, l'angle α est mesuré quand le plan P1 passe par la face 45 délimitant la languette 44. Le fait que la languette soit inclinée par rapport au plan longitudinal médian de l'embout d'extrémité 1 permet également de positionner facilement l'embout d'extrémité 1 sur la partie terminale du support longitudinal.

La figure 5 montre l'embout d'extrémité 1 selon l'invention dans une coupe V-V illustrée sur la figure 4. La rainure 28 est placée sous une portion terminale du logement 5, avec la paroi de fond 31 placée entre ces deux zones de réception. La paroi 27 délimite le volume interne 42, à l'intérieur duquel s'étend le moyen 43 formant butée. Ce dernier prend par exemple la forme d'une languette 44 qui s'étend selon une direction 46 perpendiculaire, ou sensiblement perpendiculaire à une direction 47 passant par un centre du logement 5 destiné à recevoir la partie terminale du support longitudinal.

Comme indiqué plus haut, la languette 44 prend naissance sur une portion plate 48 en regard du volume interne 42 et s'étend au-delà du logement 5, notamment jusqu'à ce que sa partie distale 49 s'étende dans un plan qui croise la rainure 28. On garantit ainsi que la languette 44 est suffisamment longue pour entrer en contact avec la partie terminale du support longitudinal.

La figure 5 met également bien en valeur la face 45 de la languette contre laquelle la tranche de la partie terminale du support longitudinal vient en appui.

De manière avantageuse, le moyen 43 formant butée peut comprendre deux languettes de structure similaire à ce qui a été expliqué plus haut. Ces deux languettes 44 sont alors ménagées de part et d'autre du plan longitudinal médian P2 de l'embout d'extrémité, celui-ci passant par un sommet 50 de l'embout d'extrémité 1 et au centre du logement 5. Les deux languettes 44 sont notamment symétriques par rapport à ce plan P2.

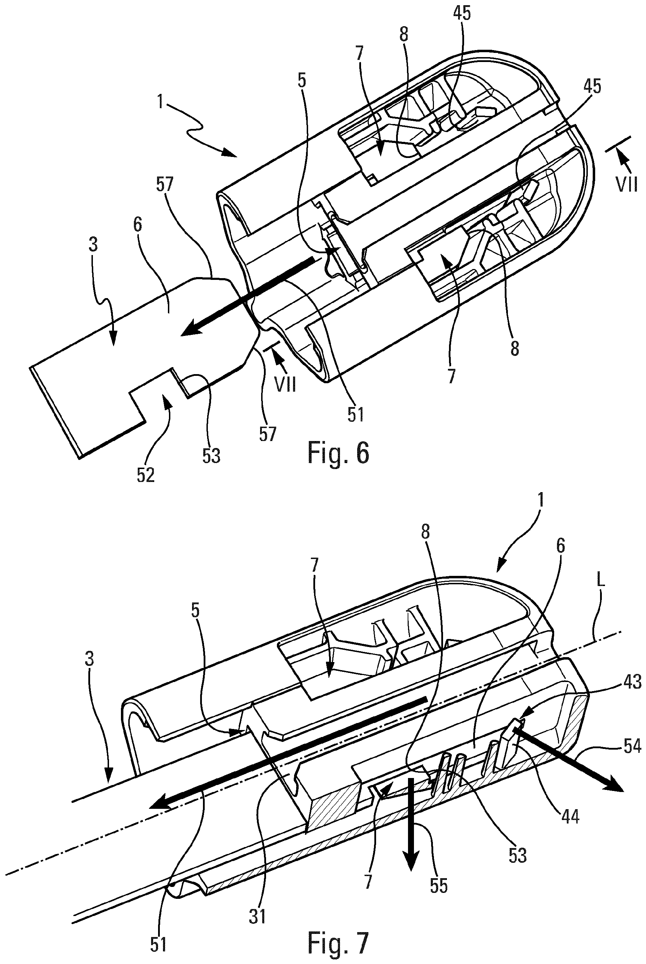

La figure 6 et la figure 7 illustrent l'assemblage de l'embout d'extrémité 1 sur le support longitudinal 3. A la figure 6, l'embout d'extrémité 1 est en phase d'approche du logement 5 selon un mouvement de translation illustré par la flèche référencée 51. Le support longitudinal 3 comprend l'encoche 52, cette dernière traversant de part en part la partie terminale du support longitudinal. Selon un exemple de réalisation, l'encoche 52 peut prendre la forme d'un évidement ou d'une découpe réalisée sur le bord de la partie terminale 6 du support longitudinal 3. De manière alternative, l'encoche 52 forme un trou entouré par la partie terminale 6.

La tranche 53 est la partie qui délimite l'encoche 52 et contre laquelle la portion 8 du moyen de verrouillage 7 vient en appui pour assurer le blocage en translation de l'embout d'extrémité 1 vis-à-vis du support longitudinal 3.

La partie terminale 6 du support longitudinal 3 comprend au moins un biseau 57, et avantageusement deux biseaux 57, qui sont agencés pour venir en appui contre la face 45 de la languette 44. On assure ainsi un appui sur une longueur suffisante, et au moins égale à une largeur de la languette 44. On garantit ainsi que la poussée sur la languette 44 se traduit par une flexion, évitant ainsi de générer une déformation irréversible de la languette 44.

La figure 7 montre l'embout d'extrémité 1 enfilé sur la partie terminale 6 du support longitudinal 3, au moment où la tranche de partie terminale vient appuyer contre le moyen 43 formant butée. Cette figure montre également la coopération entre le moyen de verrouillage 7, un dispositif de sécurisation et le support longitudinal 3. Le logement 5 reçoit la partie terminale 6 du support longitudinal 3 entre la paroi de fond 31 et les nervures 33 (figure 3).

La languette 44 se déplace dans son domaine d'élasticité, c'est-à-dire dans un domaine garantissant qu'elle reprendra sa place après avoir subi l'effort généré par l'appui du support longitudinal 3 contre la languette 44. Ce déplacement est illustré par la flèche référencée 54 qui s'étend vers l'extérieur de l'embout d'extrémité 1 et selon une direction concourante à la direction longitudinale L de l'embout d'extrémité 1. Ce mouvement offert par la flexibilité du moyen 43 formant butée permet au moyen de verrouillage 7 de venir se loger dans l'encoche 52, comme cela est montré par la flèche référencée 55. Le contre-effort généré par la flexibilité de la languette 44 permet de maintenir un contact entre la portion 8 du moyen de verrouillage et la tranche 53 de l'encoche 52. Le jeu longitudinal est ainsi supprimé.

De manière complémentaire à l'invention décrite ci-dessus et en référence à l'ensemble des figures, au moins un des moyens de verrouillage 7, voire les deux, peut comprendre un dispositif de sécurisation. La fonction de ce dispositif de sécurisation est de limiter le débattement, autrement dit le mouvement, du moyen de verrouillage 7 selon au moins un de ses sens de déplacement lors du montage de l'embout d'extrémité 1 sur la partie terminale du support longitudinal 3. On limite ainsi le risque d'actionnement intempestif et on empêche le démontage du balai d'essuyage.

Au niveau de l'embout d'extrémité 1, le dispositif de sécurisation prend la forme d'un élément, formé sur le moyen de verrouillage et qui s'étend au moins longitudinalement à une extrémité libre du moyen de verrouillage et/ou du bras élastique.

Selon un exemple de réalisation du dispositif de sécurisation, celui-ci prend par exemple la forme d'un élément qui s'étend au-delà de la portion 8. En d'autres termes, l'élément déborde ou dépasse de la portion selon la direction longitudinale L d'extension de l'embout d'extrémité 1, et en direction de la partie fermée 41 de l'embout d'extrémité 1. L'élément forme par exemple un bord agencé pour venir en contact avec au moins une face longitudinale du support longitudinal, c'est-à-dire l'une des grandes faces qui illustrent le caractère plan et en bande du support longitudinal 3.

On notera que ce bord est délimité par une surface sensiblement perpendiculaire à une face de la portion ménagée au bout du moyen de verrouillage 7. La face est celle qui vient en contact avec la tranche 53 de l'encoche 52 formée dans le support longitudinal, alors que la surface est celle qui vient contre la face longitudinale du support longitudinal, bloquant ainsi le mouvement du bras élastique 14.

Au bout du bras élastique 14, sont formés la portion 8 et le dispositif de sécurisation, notamment l'élément. Le bras élastique 14 comprend une zone sur laquelle est formé au moins un chanfrein 15 (figure 3). Ce chanfrein 15 permet la génération d'un mouvement du bras élastique 14 permettant au moyen de verrouillage 7 de s'escamoter pendant le montage de l'embout d'extrémité 1 sur la partie terminale du support longitudinal 3. On notera que le dispositif de sécurisation s'étend transversalement à cheval sur une partie délimitée par le chanfrein 15 et sur une partie délimitée par le bras élastique 14.

Comme évoqué plus haut, une face de la portion est au contact d'une tranche 53 de l'encoche 52, ce qui permet de mettre en oeuvre le moyen de verrouillage 7. Le dispositif de sécurisation de ce moyen de verrouillage est actif dès lors que la surface est en contact avec la face longitudinale du support longitudinal.

Un tel dispositif de sécurisation trouve une application intéressante avec le moyen 43 formant butée contre la partie terminale 6 du support longitudinal 3. En effet, la flexibilité de la languette 44 permet à l'embout d'extrémité 1 de se déplacer, même après que le moyen de verrouillage 7 soit logé dans l'encoche 52. Ce déplacement supplémentaire permet au dispositif de sécurisation de franchir l'encoche de manière à venir en appui contre la face du support longitudinal 3.

Une variante de réalisation du dispositif de sécurisation peut être utilisée seule, c'est-à-dire en remplacement de l'élément, ou en combinaison avec celui-ci, de manière à augmenter le niveau de sécurité du moyen de verrouillage. Le dispositif de sécurisation prend ici la forme d'une patte issue du corps 30 de l'embout d'extrémité 1. Cette patte est moulée simultanément avec le reste de l'embout d'extrémité 1 et elle présente la possibilité d'être pliée après introduction de la partie terminale 6 du support longitudinal 3. La patte comprend ainsi un pli à la limite de deux portions qui s'étendent chacune selon des plans globalement concourants, et par exemple perpendiculaires. La sécurisation du moyen de verrouillage 7 est obtenue dès lors que le dispositif de sécurisation couvre et rend ainsi inaccessible le bras élastique du moyen de verrouillage 7.

Un autre mode de réalisation du dispositif de sécurisation est illustré à la figure 4. Comme pour le mode de réalisation décrit ci-dessus, ce mode de réalisation du dispositif de sécurisation peut être utilisé seul, c'est-à-dire en remplacement de l'élément et/ou de la patte, ou en combinaison avec l'une et/ou l'autre de ces parties.

Le dispositif de sécurisation prend ici la forme d'au moins un muret 39 issu de matière avec le corps 30 de l'embout d'extrémité 1. On constate que le muret 39 est formé de manière latérale au moyen de verrouillage 7, c'est-à-dire sur le côté de celui-ci. Le muret 39 s'étend perpendiculairement par rapport au plan d'extension du logement 5. On constate que le muret 39 suit le profil du bras élastique 14 sur au moins trois côtés de celui-ci, c'est-à-dire le long de son bord périphérique. Le muret 39 est ainsi à proximité immédiate du moyen de verrouillage 7 et empêche ainsi de passer un outil pour celui ou celle qui souhaiterait actionner le bras élastique 14.

L'embout d'extrémité 1 comprend encore un ensemble de renforts 40 issus de matière avec le corps 30 à l'intérieur du volume délimité par la paroi extérieure 27.

Les procédés de montage d'un balai d'essuyage équipé d'un embout d'extrémité, par exemple celui expliqué ci-dessus, vont maintenant être décrits.

Selon un premier procédé, le balai d'essuyage 2 comprend au moins un support longitudinal 3 et au moins un composant 24 rapporté sur le support longitudinal 3. Selon un exemple de réalisation, le composant 24 peut être un ou des déflecteurs d'air 26 ou un moyen de connexion 25 destiné à relier mécaniquement le balai d'essuyage 2 à un bras d'entraînement en rotation. Le balai d'essuyage 2 mis en oeuvre dans ce procédé comprend encore un embout d'extrémité 1 avec un logement 5 qui reçoit une partie terminale 6 du support longitudinal 3. L'embout d'extrémité 1 comprend également au moins un moyen de verrouillage 7 de la partie terminale 6 du support longitudinal 3 en position engagée dans le logement 5 après que celle-ci fut engagée dans logement 5. Ce verrouillage intervient par coopération entre le moyen de verrouillage 7 et une encoche 52 ménagée dans ou sur le support longitudinal 3. L'embout d'extrémité 1 comprend un moyen 43 formant butée contre la partie terminale du support longitudinal. Selon le procédé, on pousse l'embout d'extrémité 1 contre le support longitudinal 3 de sorte à fléchir le moyen 43 formant butée et ainsi autoriser la coopération du moyen de verrouillage 7 avec l'encoche 52.

De manière complémentaire, l'étape où on pousse l'embout d'extrémité 1 contre le support longitudinal 3 peut également permettre de rendre actif un dispositif de sécurisation du moyen de verrouillage 7, dont la fonction est de limiter la possibilité de manoeuvre intempestive du moyen de verrouillage 7. On permet ainsi au dispositif de sécurisation de passer au travers de l'encoche pour venir en appui contre la face du support longitudinal 3.

Selon un deuxième procédé de montage, qui peut remplacer le premier procédé de montage ou se combiner avec celui-ci comme une étape supplémentaire au premier procédé, on réalise sur le balai d'essuyage précédemment décrit une étape au cours de laquelle on enfile l'embout d'extrémité 1 sur la partie terminale 6 du support longitudinal 3 jusqu'à coopération entre le moyen de verrouillage 7 et une encoche 52 ménagée dans le support longitudinal 3. Ce second procédé prévoit que l'on déforme le dispositif de sécurisation, notamment la patte, issu du corps 30 de l'embout d'extrémité 1 jusqu'à ce que le dispositif de sécurisation, notamment la patte, couvre le moyen de verrouillage 7. On bloque ainsi l'accès au moyen de verrouillage de manière à rendre indémontable le balai d'essuyage.

## Revendications

1. Embout d'extrémité (1) pour un balai d'essuyage (2) d'une vitre d'un véhicule comprenant au moins un support longitudinal (3) ainsi qu'une lame (4) destinée à être appliquée contre la vitre, l'embout d'extrémité (1) comprenant
- un logement (5) apte à recevoir une partie terminale (6) du support longitudinal (3),
- au moins un moyen de verrouillage (7) de la partie terminale (6) du support longitudinal (3) en position engagée dans le logement (5),
- au moins un moyen (43) formant butée contre la partie terminale (6) du support longitudinal (3),
**caractérisé en ce que** le moyen (43) est flexible de sorte à générer un appui du moyen de verrouillage (7) contre le support longitudinal (3).

2. Embout selon la revendication 1, dans lequel la flexibilité du moyen (43) formant butée résulte d'une élasticité du matériau constitutif du moyen (43).

3. Embout selon l'une quelconque des revendications précédentes, dans lequel le moyen (43) formant butée est une languette (44) qui prend naissance sur une paroi extérieure (27) délimitant l'embout d'extrémité (1).

4. Embout selon la revendication 3, dans lequel la languette (44) s'étend dans un volume interne (42) délimité par la paroi extérieure (27) notamment selon une direction (56) concourante à un plan dans lequel s'étend majoritairement le logement (5).

5. Embout selon l'une quelconque des revendications 3 ou 4, dans lequel la languette (44) présente une section parallélépipédique.

6. Embout selon l'une quelconque des revendications 3 à 5, dans lequel la languette (44) s'étend selon un plan (P1) qui forme un angle compris entre 10° et 85° avec un plan longitudinal médian (P2) de l'embo ut d'extrémité (1).

7. Embout selon l'une quelconque des revendications précédentes, dans lequel le moyen (43) formant butée comprend deux languettes (44) ménagées de part et d'autre d'un plan longitudinal médian (P2) de l'embout d'extrémité (1).

8. Embout selon l'une quelconque des revendications précédentes, dans lequel le moyen de verrouillage (7) comprend un bras élastique (14) déplaçable en rotation autour d'un axe (16) qui s'étend sensiblement parallèlement à un plan dans lequel s'étend majoritairement le logement (5) et perpendiculairement à une direction longitudinale (L) de l'embout d'extrémité (1).

9. Balai d'essuyage (2) comprenant au moins un support longitudinal (3) ainsi qu'une lame (4) destinée à être appliquée contre la vitre, le support longitudinal (3) comprenant une encoche (52) ménagée dans une partie terminale (6) du support longitudinal (3), caractérisé en qu'il comprend un embout d'extrémité (1) selon l'une quelconque des revendications précédentes.

10. Balai selon la revendication 9, dans lequel le moyen de verrouillage (7) comprend une portion de blocage longitudinal et en appui contre au moins une tranche (53) de l'encoche (52), ledit appui étant généré par la flexibilité du moyen (43) formant butée.

11. Balai selon l'une quelconque des revendications 9 ou 10, dans lequel la partie terminale (6) du support longitudinal (3) comprend au moins un biseau (57) en appui sur une face (45) du moyen (43) formant butée.

12. Système d'essuyage d'une vitre d'un véhicule comprenant un bras et un balai d'essuyage (2) selon l'une quelconque des revendications 9 à 11.

## Patentansprüche

1. Endstück (1) für einen Scheibenwischer (2) einer Fahrzeugscheibe, umfassend mindestens einen Längsträger (3) und ein Blatt (4), das dazu bestimmt ist, gegen die Scheibe angelegt zu werden, wobei das Endstück (1) Folgendes umfasst:
- ein Gehäuse (5), das zur Aufnahme eines Endabschnitts (6) des Längsträgers (3) geeignet ist,
- mindestens ein Verriegelungsmittel (7) für den Endabschnitt (6) des Längsträgers (3) in einer in das Gehäuse (5) eingreifenden Position,
- mindestens ein Mittel (43), das einen Anschlag gegen den Endabschnitt (6) des Längsträgers (3) bildet,
**dadurch gekennzeichnet, dass** das Mittel (43) flexibel ist, sodass eine Anlage des Verriegelungsmittels (7) gegen den Längsträger (3) entsteht.

2. Endstück nach Anspruch 1, wobei die Flexibilität des Mittels (43), das einen Anschlag bildet, auf eine Elastizität des Materials zurückzuführen ist, aus dem das Mittel (43) besteht.

3. Endstück nach einem der vorangehenden Ansprüche, wobei es sich bei dem einen Anschlag bildenden Mittel (43) um eine Zunge (44) handelt, die an einer Außenwand (27) entsteht, die das Endstück (1) begrenzt.

4. Endstück nach Anspruch 3, bei dem sich die Zunge (44) in ein von der Außenwand (27) begrenztes Innenvolumen (42) erstreckt, insbesondere in einer Richtung (56), die mit einer Ebene zusammenfällt, in der sich das Gehäuse (5) überwiegend erstreckt.

5. Endstück nach einem der Ansprüche 3 oder 4, wobei die Zunge (44) einen quaderförmigen Abschnitt aufweist.

6. Endstück nach einem der Ansprüche 3 bis 5, wobei sich die Zunge (44) in einer Ebene (P1) erstreckt, die einen Winkel zwischen 10° und 85° mit einer mittleren Längsebene (P2) des Endstücks (1) bildet.

7. Endstück nach einem der vorangehenden Ansprüche, wobei das einen Anschlag bildende Mittel (43) zwei Zungen (44) aufweist, die auf beiden Seiten einer mittleren Längsebene (P2) des Endstücks (1) angeordnet sind.

8. Endstück nach einem der vorangehenden Ansprüche, wobei das Verriegelungsmittel (7) einen elastischen Arm (14) umfasst, der in Rotation um eine Achse (16) beweglich ist, die im Wesentlichen parallel zu einer Ebene, in der sich das Gehäuse (5) hauptsächlich erstreckt, und senkrecht zu einer Längsrichtung (L) des Endstücks (1) verläuft.

9. Scheibenwischer (2) mit mindestens einem Längsträger (3) und einem Blatt (4), das dazu bestimmt ist, gegen die Scheibe angelegt zu werden, wobei der Längsträger (3) eine Kerbe (52) aufweist, die in einem Endabschnitt (6) des Längsträgers (3) vorgesehen ist, **dadurch gekennzeichnet, dass** er ein Endstück (1) nach einem der vorangehenden Ansprüche aufweist.

10. Scheibenwischer nach Anspruch 9, wobei das Verriegelungsmittel (7) einen Abschnitt zur Längssperrung und in Anlage gegen mindestens eine Kante (53) der Kerbe (52) aufweist, wobei diese Anlage durch die Flexibilität des einen Anschlag bildenden Mittels (43) erzeugt wird.

11. Scheibenwischer nach einem der Ansprüche 9 oder 10, wobei der Endabschnitt (6) des Längsträgers (3) mindestens eine Abschrägung (57) aufweist, die an einer Fläche (45) des einen Anschlag bildenden Mittels (43) anliegt.

12. System zum Wischen einer Fahrzeugscheibe, umfassend einen Arm und einen Scheibenwischer (2) nach einem der Ansprüche 9 bis 11.

## Claims

1. End fitting (1) for a vehicle window wiper (2), comprising at least one longitudinal support (3) and a blade (4) intended to be pressed against the window, the end fitting (1) comprising
- a housing (5) that is able to receive an end part (6) of the longitudinal support (3),
- at least one means (7) for locking the end part (6) of the longitudinal support (3) in the position fitted in the housing (5),
- at least one means (43) that forms a stop against the end part (6) of the longitudinal support (3),
**characterized in that** the means (43) is flexible so as to cause the locking means (7) to bear against the longitudinal support (3).

2. End fitting according to Claim 1, wherein the flexibility of the means (43) that forms a stop results from elasticity of the material of which the means (43) is made.

3. End fitting according to either one of the preceding claims, wherein the means (43) that forms a stop is a tongue (44) that extends from an outside wall (27) delimiting the end fitting (1).

4. End fitting according to Claim 3, wherein the tongue (44) extends through an internal volume (42) delimited by the outside wall (27) notably in a direction (56) concurrent with a plane in which most of the housing (5) extends.

5. End fitting according to either one of Claims 3 and 4, wherein the tongue (44) has a parallelepipedal section.

6. End fitting according to any one of Claims 3 to 5, wherein the tongue (44) extends in a plane (P1) which forms an angle of between 10° and 85° with a longitudinal mid-plane (P2) of the end fitting (1).

7. End fitting according to any one of the preceding claims, wherein the means (43) that forms a stop comprises two tongues (44) that are formed on either side of a longitudinal mid-plane (P2) of the end fitting (1).

8. End fitting according to any one of the preceding claims, wherein the locking means (7) comprises an elastic arm (14) that is rotatable about an axis (16) which extends approximately parallel to a plane in which most of the housing (5) extends and perpendicularly to a longitudinal direction (L) of the end fitting (1).

9. Wiper (2) comprising at least one longitudinal support (3) and a blade (4) intended to be pressed against the window, the longitudinal support (3) comprising a notch (52) formed in an end part (6) of the longitudinal support (3), **characterized in that** it comprises an end fitting (1) according to any one of the preceding claims.

10. Wiper according to Claim 9, wherein the locking means (7) comprises a longitudinal blocking portion that bears against at least one edge (53) of the notch (52), said bearing being brought about by the flexibility of the means (43) that forms a stop.

11. Wiper according to either one of Claims 9 and 10, wherein the end part (6) of the longitudinal support (3) comprises at least one bevel (57) that bears against a face (45) of the means (43) that forms a stop.

12. Vehicle window wiping system comprising an arm and a wiper (2) according to any one of Claims 9 to 11.
